# EUROPÄISCHE PATENTSCHRIFT

(11) **EP 1 935 260 B1**
(45) Veröffentlichungstag und Bekanntmachung des Hinweises auf die Patenterteilung: **27.06.2012**
(21) Anmeldenummer: 07024436.3
(22) Anmeldetag: 17.12.2007
(51) Int. Cl.: A24C 5/32, B65G 47/08

(54) **Förderstabilisator**
Stabiliser for mechanical handling
Stabilisateur d'alimentation

(30) Priorität: 20.12.2006 DE 102006060979
(43) Veröffentlichungstag der Anmeldung: 25.06.2008
(73) Patentinhaber: Hauni Maschinenbau Aktiengesellschaft, 21033 Hamburg (DE)
(72) Erfinder: Becker, Steffen, 21502 Geesthacht (DE); Jasper, Olaf, 21035 Hamburg (DE); Hoffleit, Heiko, 21521 Dassendorf (DE)
(74) Vertreter: Seemann, Ralph

(56) Entgegenhaltungen:
- EP-A- 0 682 881
- EP-A- 0 960 576
- EP-A- 1 504 680
- DE-A1- 2 906 502
- DE-A1- 3 128 059
- DE-A1- 3 444 468
- DE-A1- 4 200 999
- GB-A- 1 320 151
- GB-A- 1 494 037
- GB-A- 2 149 642
- US-A- 2 010 486
- US-A- 3 664 891
- US-A- 4 189 045

## Beschreibung

Die Erfindung betrifft eine Vorrichtung zum, insbesondere längsaxialen, Fördern von stabförmigen Artikeln der Tabak verarbeitenden Industrie mit einem ersten sich bewegenden Förderelement, das zur queraxialen Beschleunigung der Artikel rotationsasymmetrisch ist, wobei relativ zur Förderrichtung des Artikels stromaufwärts des ersten sich bewegenden Förderelements eine Stabilisierungsvorrichtung vorgesehen ist, die wenigstens eine Saugluftöffnung aufweist, die in Wirkverbindung mit einem stabförmigen Artikel bringbar ist.

Unter stabförmigen Artikeln der Tabak verarbeitenden Industrie sollen im hier vorliegenden Zusammenhang im Strangverfahren hergestellte, von einem fortlaufend gebildeten Strang abgetrennte Artikel, wie Zigaretten, Zigarillos, Filterstäbe und dergleichen zu verstehen sein. Es können allerdings auch mit beispielsweise der Maschine "Merlin" der Anmelderin hergestellte Multisegmentfilterstäbe verstanden werden. Hierbei werden zunächst queraxial Filtersegmentgruppen zusammengestellt, die dann längsaxial in einem Strangverfahren, beispielsweise durch Umhüllung eines Umhüllungsmaterialstreifens zusammengefügt werden. Hierzu sei beispielsweise auf die WO 03/024256 A2 der Anmelderin verwiesen.

Aus dem Stand der Technik sind Vorrichtungen bekannt, bei denen stabförmige Artikel längsaxial beschleunigt werden und mit hoher Geschwindigkeit in eine Muldentrommel eingeschossen werden. So ist aus GB 1 494 037 A eine Strangmaschine der Tabak verarbeitenden Industrie bekannt, bei der längsaxial geförderte stabförmige Artikel sich zwischen einer Schneidvorrichtung und einer Beschleunigungsvorrichtung entlang einer Wand einer Saugkammer bewegen, die Saugluftöffnungen aufweist. Die Saugluft übt eine Bremswirkung auf die Artikel aus, damit sie vorläufig voneinander beabstandet werden, um mit der Beschleunigungsvorrichtung mit wohldefinierten Abständen längsaxial beschleunigt weitergefördert zu werden.

In US 3 664 891 A1 ist eine Vorrichtung beschrieben, mit der in einer Reihe längsaxial geförderte Artikel der Tabak verarbeitenden Industrie in eine queraxiale Förderung umgelenkt werden, wobei die queraxiale Förderung in zwei Reihen nebeneinander geschieht. Nach dem Ablängen der Artikel aus einem Strang werden die Artikel von zwei in umgekehrter Richtung sich drehenden Nockenscheiben paarweise erfasst und längsaxial in den Eingang einer Mulde einer Muldentrommel beschleunigt. Stromabwärts der Nockenscheiben werden die Artikel beim Eintritt in die Mulden mit Saugluft stabilisiert.

Aus EP 0 960 576 A1 ist eine Vorrichtung zur Überführung von stabförmigen Artikeln der Tabak verarbeitenden Industrie in zwei parallelen Abschnittssträngen von einer längsaxialen in eine queraxiale Förderung bekannt, bei der ein sogenanntes "Kicker"-Rad eine periphere Mulde mit Saugluftlöchern aufweist. Damit werden in einer V-förmigen Rinne längsaxial geförderte Artikel in die Aufnahmen einer Trommel beschleunigt, die die Artikel queraxial fördert.

Ein Vorläufer bekannter Vorrichtungen mit Umlenkung in eine queraxiale Bewegungsrichtung ist aus US 2 010 486 A1 bekannt. Dieser Stand der Technik betrifft eine Zigarettenmaschine, bei der stabförmige Artikel aus einem Strang abgelängt werden und anschließend längsaxial zwischen zwei Förderbändern zu einer Umlenkvorrichtung gefördert werden, in der sie in die Mulden einer Muldentrommel eingelegt werden, in der sie queraxial weitergefördert werden. Dieser Stand der Technik lässt keine modernen hohen Produktionsgeschwindigkeiten zu.

Es wird bei Strangmaschinen der Tabak verarbeitenden Industrie, wie Zigarettenstrangmaschinen oder Filterstrangmaschinen, mit zunehmender Produktionsgeschwindigkeit aber auch bei längeren Filterstäben immer schwieriger, die vom Strang abgetrennten Strangabschnitte aus ihrer längsaxialen Produktionsförderbahn in eine queraxiale Förderbahn für die Weiterverarbeitung zu überführen, da die Strangabschnitte in der dafür zur Verfügung stehenden kurzen Zeit nicht mehr schnell genug auf den quer zur Strangförderbahn bewegten Querförderer überführt werden können. Außerdem kommt es bei entsprechend längeren oder schwereren Stäben zu immer erheblicheren Schwingungen und queraxialen ungewünschten Bewegungen, die ein Überführen in einen quer zur Strangförderbahn bewegten Querförderer beim Übergeben erschweren. Hierdurch können beispielsweise Multisegmentfilter mit einer Länge von 160 mm nicht mehr übergeben werden, so dass Strangbrüche die Folge sein können bzw. eine gewünschte hohe Geschwindigkeit nicht erreicht werden kann.

Um die Umlenkung der Übergabe von entsprechenden Artikeln aus ihrer längsaxialen Förderrichtung auf einen Querförderer zu erleichtern, ist es gemäß der DE 34 44 468 C2 bekannt, Exzenterscheiben zu verwenden, die sowohl eine Förderung in längsaxialer Richtung der Artikel ermöglicht als auch eine Bewegungskomponente in queraxialer Förderrichtung, so dass die Bewegung der Artikel der queraxialen Bewegung einer Einstoßtrommel angepasst werden kann. Die Handhabung von entsprechend langen und/oder schweren stabförmigen Artikeln bei gewünschter hoher Geschwindigkeit stellt sich aufgrund eines sich hierbei einstellenden instabilen Zustandes, insbesondere aufgrund von ungewünschten queraxialen Bewegungen, der Artikel als problematisch dar.

Auch US 4 189 045 A und DE 29 06 502 A1 offenbaren zwei bzw. eine exzentrische rotierende Scheibe in einer Vorrichtung zur Überführung einer längsaxialen Förderung von stabförmigen Artikeln in eine queraxiale Förderung, mittels derer längsaxial geförderte, stabförmige Artikel queraxial beschleunigt werden. Die Vorrichtung weist ein zweigeteiltes Förderband und einen Spalt zwischen den Förderbändern auf, wobei am Spalt Saugluft anliegt, damit die stabförmigen Artikel an die beiden parallelen Elemente gesaugt werden und an diesen parallelen Elementen bzw. Förderbändern in Richtung auf eine rotierende Trommel mit Aufnahmen für die stabförmigen Artikel transportiert werden.

Es ist Aufgabe der vorliegenden Erfindung, dieses Problem des Standes der Technik zu vermeiden und eine stabile Förderung von stabförmigen Artikeln zu ermöglichen.

Gelöst wird diese Aufgabe durch eine Vorrichtung zum, insbesondere längsaxialen, Fördern von stabförmigen Artikeln der Tabak verarbeitenden Industrie mit einem ersten sich bewegenden Förderelement, das zur queraxialen Beschleunigung der Artikel rotationsasymmetrisch ist, wobei relativ zur Förderrichtung des Artikels stromaufwärts des ersten sich bewegenden Förderelements eine, insbesondere positionsneutrale, Stabilisationsvorrichtung vorgesehen ist, die wenigstens eine Saugluftöffnung aufweist, die in Wirkverbindung mit einem stabförmigen Artikel bringbar ist, die dadurch weitergebildet ist, dass ein zweites sich bewegendes Förderelement vorgesehen ist, das relativ zur Förderrichtung des Artikels stromaufwärts der Stabilisationsvorrichtung angeordnet ist, wobei das erste und/oder zweite Förderelement als eine die Artikel queraxial beschleunigende Exzenterscheibe ausgebildet ist und wenigstens eine Saugluftöffnung im Bereich eines Exzenters der Exzenterscheibe angeordnet ist.

Bei der Stabilisationsvorrichtung kann es sich beispielsweise um eine glatte Führungswand handeln oder eine Führungsnut. Die Stabilisationsvorrichtung weist allerdings wenigstens eine Saugluftöffnung auf, die in Wirkverbindung mit einem stabförmigen Artikel bringbar ist. Die Wirkverbindung ist insbesondere im Betrieb der Vorrichtung vorgesehen. Hierzu wird Saugluft an die Saugluftöffnungen angelegt, so dass ein Unterdruck im Bereich der Saugluftöffnungen herrscht, der die stabförmigen bzw. einen stabförmigen Artikel anzieht und so in deren oder dessen Lage bei der Förderung stabilisiert.

Durch die, insbesondere positionsneutrale, Stabilisationsvorrichtung werden auftretende queraxiale Schwingungen weitestgehend vermieden. Unter positionsneutral wird im Rahmen der Erfindung insbesondere unbewegt und/oder starr positioniert und/oder stationär verstanden. Im Gegensatz zu dem sich bewegenden Förderelement bewegt sich die Stabilisationsvorrichtung nicht.

Dadurch, dass das erste Förderelement rotationsasymmetrisch ist, kann besonders einfach und effizient eine queraxiale Beschleunigung der stabförmigen Artikel erreicht werden, um diese an die queraxiale Fördergeschwindigkeit einer sich an das erste Förderelement anschließenden Einstoßtrommel anzupassen.

Vorzugsweise sind die Saugluftöffnungen ausgebildet, um einen stabförmigen Artikel queraxial anzusaugen. Hierzu sind die Saugluftöffnungen vorzugsweise in einer Wand angeordnet, die zu den Artikeln ausgerichtet ist. Vorzugsweise sind zwei oder mehr als zwei, insbesondere fünf, Saugluftöffnungen vorgesehen.

Da erfindungsgemäß ein zweites sich bewegendes Förderelement vorgesehen ist, das relativ zur Förderrichtung des Artikels stromaufwärts der Stabilisationsvorrichtung angeordnet ist, ist eine besonders sichere Förderung der stabförmigen Artikel möglich.

Besonders effizient funktioniert das erste und/oder zweite Förderelement, wenn dieses bzw. diese wenigstens eine Saugluftöffnung aufweist bzw. aufweisen, um einen stabförmigen Artikel während der Förderung zeitweise zu halten. Als Alternative können auch Walzenpaare bzw. Scheibenpaare Verwendung finden, die in der DE 36 00 313 A1 offenbart sind.

Vorzugsweise ist das zweite Förderelement rotationsasymmetrisch. Hierdurch kann besonders einfach und effizient eine queraxiale Beschleunigung der stabförmigen Artikel erreicht werden, um diese an die queraxiale Fördergeschwindigkeit einer sich an das erste Förderelement anschließenden Einstoßtrommel anzupassen.

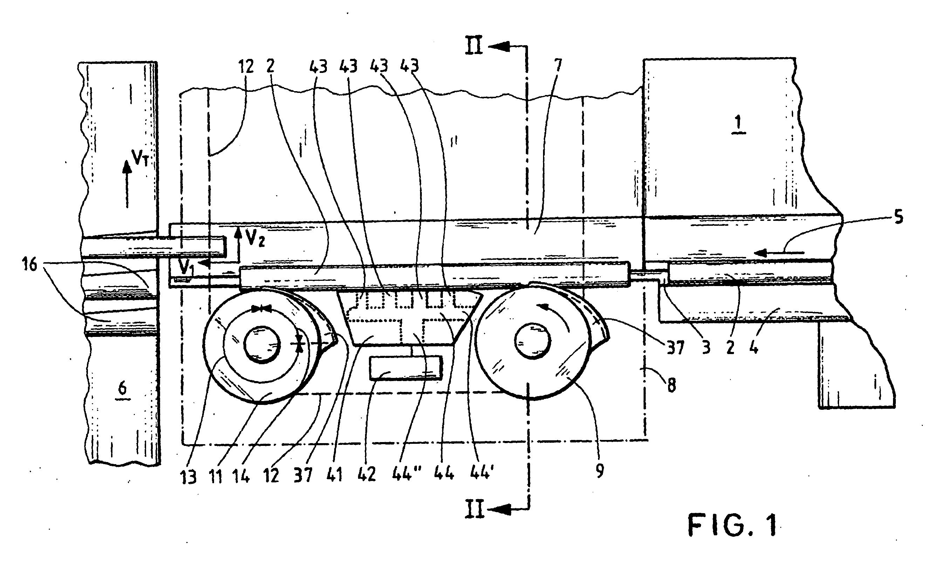

Erfindungsgemäß ist oder sind das erste und/oder zweite Förderelement als eine die Artikel queraxial beschleunigende Exzenterscheibe ausgebildet und ist wenigstens eine Saugluftöffnung im Bereich eines Exzenters der Exzenterscheibe angeordnet. Im Rahmen der Erfindung wird unter dem Begriff Exzenter auch eine Rampe verstanden und/oder ein Steg, der, wie beispielsweise in Fig. 1 dargestellt, ausgebildet ist. Vorzugsweise ist stromabwärts des ersten Förderelements eine Einstoßtrommel vorgesehen, die die aufgenommenen Artikel queraxial fördert und gegebenenfalls ausstößt. Vorzugsweise beschleunigt das erste und/oder zweite Förderelement einen Artikel längsaxial und insbesondere auch queraxial.

Eine besonders bevorzugte Ausführungsform liegt dann vor, wenn die Stabilisationsvorrichtung an deren stromaufwärtigen Teil eine Fase und/oder eine abgerundete Kante aufweist. Die Fase und die abgerundete Kante dienen dazu, die längsaxial geförderten stabförmigen Artikel sanft an der Stabilisationsvorrichtung vorbeizuleiten, so dass keine Beschädigungen an der Vorderkante des stabförmigen Artikels auftreten.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:
- Fig. 1: eine schematische Draufsicht auf ein Ausführungsbeispiel der Vorrichtung nach der Erfindung,
- Fig. 2: eine schematische Schnittansicht entlang 11-11 der Fig. 1,
- Fig. 3: eine schematische Draufsicht auf eine Exzenterscheibe,
- Fig. 4: eine schematische Seitenansicht auf eine Stabilisationsvorrichtung gemäß der Erfindung und
- Fig. 5: eine schematische dreidimensionale Darstellung einer Stabilisationsvorrichtung gemäß der Erfindung.

Mit 1 in Fig. 1 ist eine nicht näher dargestellte Strangmaschine üblicher Bauart bezeichnet. Mittels eines nicht gezeigten Messerapparats werden von einem fortlaufend hergestellten Filterstrang abgetrennte Filterabschnitte bzw. Artikel 2 auf einer mit einer keilförmigen Nut 3 versehenen Prismenschiene 4 längsaxial auf einen Querförderer in Form einer umlaufenden Einstoßtrommel 6 zugefördert. Der vordere stromabwärtige Teil der Prismenschiene 4 ist als Gleitfläche 7 ausgebildet, die sich tangential zur Umfangsfläche der Aufnahmen 16 der Einstoßtrommel 6 erstreckt. Seitlich der Gleitfläche 7 sind nebeneinander auf einer Montageplatte 8 zwei identisch gestaltete Exzenterscheiben 9, 11 gelagert, die mittels eines Zahnriemens 12 von einem nicht gezeigten Antrieb synchron und in gleicher Winkellage angetrieben werden. Jede Exzenterscheibe 9, 11 weist einen ersten Umfangsabschnitt 13 mit einem kleineren Radius und einen zweiten Umfangsabschnitt 14 mit einem von diesem Radius ausgehenden sich vergrößernden Radius auf. Im gezeigten Ausführungsbeispiel erstreckt sich der zweite Umfangsabschnitt mit sich vergrößerndem Radius über einen Winkel von etwa 90°. Die Exzenterscheiben sind so ausgebildet und seitlich der Gleitfläche 7 angeordnet, dass ihr erster Umfangsabschnitt 13 mit kleinerem Radius die längsaxial angeförderten Artikel 2 gerade tangiert und dass ihr zweiter Umfangsabschnitt 14 mit zunehmenden Radius die Artikel 2 aus der längsaxialen Förderrichtung über die Gleitfläche 7 seitwärts beschleunigt.

Bei entsprechend langen stabförmigen Artikeln 2 wird zur Verhinderung von ungewünschten queraxialen Schwingungen des Artikels 2 eine Stabilisationsvorrichtung 41 vorgesehen, die in diesem Ausführungsbeispiel zwischen den beiden Exzenterscheiben 9, 11 angeordnet ist. Es sind in diesem Ausführungsbeispiel vier Saugluftöffnungen 43 vorgesehen, die mit einer Bohrung 44 verbunden sind. Die Bohrung 44 geht über in eine Bohrung 44', die über eine nicht mit Bezugsziffer versehene Leitung mit einer Unterdruckquelle 42 verbunden ist. Bei dem Artikel 2 handelt es sich beispielsweise um einen Multisegmentfilter vierfacher Gebrauchslänge mit einer Gesamtlänge von 160 mm. Durch Anlegen von Saugluft an die Saugluftöffnungen 43 wird der Artikel 2 etwas angesaugt, so dass sich die Lage des Artikels 2 beim Beschleunigungsvorgang durch die Exzenterscheiben 9, 11 bzw. Beschleunigerscheiben 9, 11 stabilisiert. Hierdurch wird ein sauberer Übergang in die Einstoßtrommel 6 ermöglicht. Die Umfangsfläche der Einstoßtrommel 6 ist mit achsparallelen Aufnahmen 16 für die Aufnahme der queraxial weiter zu fördernden Artikel 2 versehen.

Die Beschleunigerscheibe 9 kann über den gesamten Umfang Saugluftöffnungen aufweisen bzw. fast über den gesamten Umfang. Hierdurch wird die Beschleunigung der Artikel 2 auch außerhalb des Bereichs des Exzenters bzw. Steges 37 ermöglicht. Vorzugsweise ist jeweils nur eine Saugluftöffnung bzw. sind nur zwei Saugluftöffnungen mit Saugluft versehen, nämlich diejenige Öffnung bzw. diejenigen Öffnungen, die im Eingriff mit dem Artikel steht bzw. stehen. Die Exzenterscheibe 11 benötigt hingegen lediglich Saugluftöffnungen im Bereich des Steges 37 bzw. optional kurz davor und kurz danach noch zusätzlich.

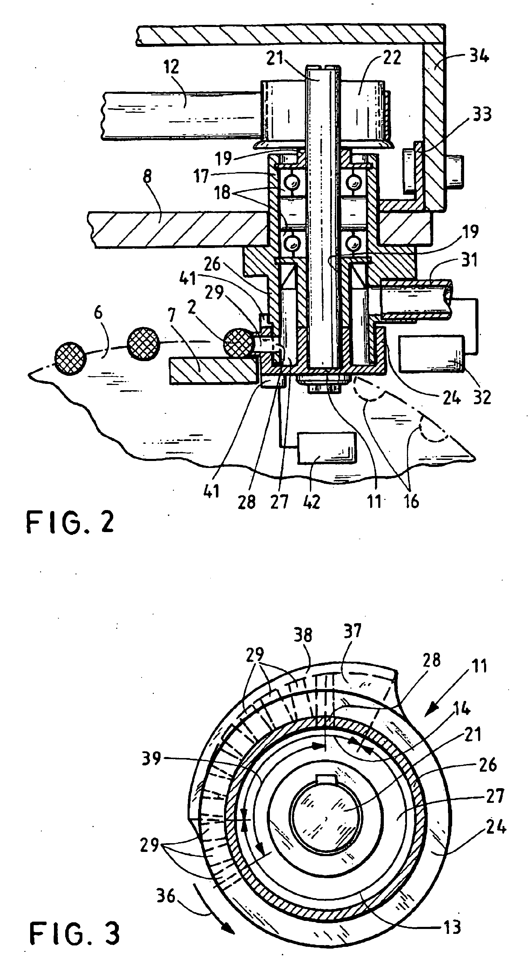

Fig. 2 zeigt eine schematische Schnittansicht entlang II-II der Fig. 1, wobei hier auch die in Fig. 1 der Übersichtlichkeit halber fortgelassenen Teile in Fig. 2 dargestellt sind. Gleiche Teile sind in sämtlichen Figuren mit denselben Bezugszeichen versehen.

Fig. 2 zeigt die am nicht dargestellten Maschinenrahmen befestigte Montageplatte 8, welche ein Lagergehäuse 17 für die Aufnahme der Exzenterscheiben 9, 11 trägt. In dem Lagergehäuse 17 ist mittels Lagerringen 18 und Lagerbuchsen 19 die Antriebswelle 21 der Exzenterscheibe 11 drehbar gelagert. Die auf einer Seite die Exzenterscheibe 11 tragende Antriebswelle 21 trägt auf ihrer anderen Seite eine Zahnriemenscheibe 22, auf die von einem nicht dargestellten Antriebsmittel über den Zahnriemen 12 ein vorgegebenes Drehmoment übertragen wird.

Die Innenfläche der Umfangswand 24 der topfartig ausgebildeten Exzenterscheibe 11 gleitet bei der Rotation dichtend an einem zylindrisch ausgebildeten Gehäuseteil 26 des Lagergehäuses 17 und umschließt mit dem Gehäuseteil 26 einen Innenraum 27 für die Unterdruckzuführung zu einem feststehenden Steuerschlitz 28 im Gehäuseteil 26 und zu radialen Saugluftöffnungen 29 in der Umfangswand 24 der Exzenterscheibe 11. Der Innenraum 27 ist durch einen Anschluss 31 mit einer Unterdruckquelle 32 verbunden. Fig. 2 zeigt die neben der Exzenterscheibe 11 verlaufende Gleitfläche 7 und, mit einer strichpunktierten Linie angedeutet, einen Ausschnitt des Umfangs des Querförderers in Form einer umlaufenden Einstoßtrommel 6 mit achsparallelen Aufnahmen 16.

Ein auf der Montageplatte 8 befestigter Befestigungswinkel 33 trägt eine Abdeckung 34, welche die beschriebene Vorrichtung umgibt und schützt.

Außerdem ist in Fig. 2 eine erfindungsgemäße Stabilisationsvorrichtung 41 angedeutet, die über eine nicht mit Bezugsziffer versehene Leitung mit einer Unterdruckquelle 42 in Wirkverbindung steht. Die Unterdruckquelle 42 ist nur schematisch angedeutet. Die Unterdruckquellen 42 und 32 können auch zusammengefasst sein oder eine einzige Unterdruckquelle sein. Es können dann in den Leitungen zu den Saugluftöffnungen 29 und 43 einstellbare Drosseln vorgesehen sein und Ventile, um die gewünschte Saugluft zu steuern. Zur Steuerung der Saugluft können auch, wie unten dargestellt ist, Steuerschlitze dienen.

Fig. 3 zeigt eine schematische Draufsicht auf eine Exzenterscheibe 11. Sie ist als Topfscheibe mit einer zylindrischen Umfangswand 24 ausgebildet, deren Innenfläche gleitend an dem geschnittenen dargestellten, stationären Gehäuseteil 26 anliegt. Das Gehäuseteil 26 weist auf seiner der Bewegungsbahn der Artikel 2 zugewandten Seite einen Steuerschlitz 28 auf. Die Exzenterscheibe 11 ist auf die Antriebswelle 21 aufgekeilt und wird von dieser in Richtung des Pfeils 36 angetrieben. Im Umfangsabschnitt 14 ist die Exzenterscheibe 11 mit einem kontinuierlich zunehmenden, exzentrischen Steg 37 versehen, welcher eine in Umfangsrichtung verlaufende Führungsnut 38 aufweist. In seinem Umfangsbereich 39 sind in der Umfangswand 24 radiale Saugluftöffnungen 29 angeordnet, die im Umfangsabschnitt 14 durch den exzentrischen Steg 37 verlaufen und in der Führungsnut 38 münden. Die Saugluftöffnungen 29 korrespondieren bei der Rotation der Exzenterscheibe 11 nacheinander mit dem stationären Steuerschlitz 28 im Gehäuseteil 26, so dass sie nacheinander mit dem im Innenraum 27 herrschenden Unterdruck beaufschlagt werden. Der Innenraum 27 steht auf die in Fig. 2 dargestellte Weise mit der Unterdruckquelle 32 in Verbindung.

Der Antrieb der Exzenterscheiben 9, 11 ist so mit dem Maschinenantrieb synchronisiert, dass der exzentrische Steg 37 beider Exzenterscheiben in dem Moment wirksam wird, wenn ein Filterstab bzw. Artikel 2 etwa die in Fig. 1 gezeigte Position erreicht hat. In dem Moment liegt der Filterstab bzw. Artikel 2 am Umfang beider Exzenterscheiben 9, 11 an und wird nun bei weiterer Drehung der Exzenterscheiben 9, 11 quer zu seiner längsaxialen Förderrichtung beschleunigt, bis er die in Fig. 1 angedeutete Geschwindigkeit v₂ erreicht hat. Bei dieser queraxialen Beschleunigung gleitet der Filterstab bzw. Artikel 2 parallel zu seiner ursprünglichen Förderrichtung auf der Gleitfläche 7 mit einer Bewegungskomponente in Richtung v₁ und einer zunehmenden Bewegungskomponente in Richtung v₂ entlang. Anfänglich kann der Artikel 2 auch auf der Stabilisationsvorrichtung 41 anliegen und auf diesem entlanggleiten. Sobald eine Bewegungskomponente in queraxialer Richtung durch die Exzenterscheiben 9, 11 hervorgerufen wird, löst sich dann der Filterstab 2 von der Stabilisationsvorrichtung 41. Aufgrund des weiterhin anliegenden Saugluftdrucks findet allerdings auch eine weitere Stabilisierung statt.

Die Endgeschwindigkeit v₂ ist etwa gleich der Umfangsgeschwindigkeit V_{T} der Einstoßtrommel 6. Sobald der Filterstab 2 die vorgesehene queraxiale Geschwindigkeit v₂ erreicht hat, gleitet er in eine Mulde 16 der Einstoßtrommel 6 und wird von dieser aufgenommen, ohne dass Rückhaltekräfte oder Biege- oder Knickbeanspruchungen auf dem Filterstab bzw. Artikel wirken. Auf diese Weise ist auch bei hohen Produktionsgeschwindigkeiten der Strangmaschine ein sanfter Übergang der Artikel 2 aus ihrer längsaxialen Förderrichtung in die queraxiale Förderrichtung auf dem Querförderer 6 gewährleistet. Dabei ist während der kritischen Phase der queraxialen Beschleunigung für eine sichere Führung des Artikels 2 gesorgt, da die im Bereich des exzentrischen Steges 37 der Exzenterscheiben 9, 11 wirkende Saugluft die Artikel am Umfang der Exzenterscheiben 9, 11 hält und führt. Zusätzlich dient die Saugluft der Stabilisationsvorrichtung 41 dazu, die Artikel 2 weiter kontrolliert zu fördern, ohne dass diese beginnen zu kippen bzw. sich queraxial unkontrolliert zu bewegen.

Wie insbesondere Fig. 3 zeigt, sind schon im Umfangsabschnitt 3 mit kleinerem Radius einige Saugluftöffnungen 29 angeordnet, so dass der Artikel 2 schon vor Beginn der Querbeschleunigung von dem Umfang der Exzenterscheiben 9, 11 erfasst wird. Der Umfangsbereich 39, in dem die Saugluftöffnungen 29 angeordnet sind, endet, wie Fig. 3 zeigt, schon vor dem Abschnitt größter Exzentrizität, so dass die Artikel 2 von den Exzenterscheiben 9, 11 gleichzeitig ohne weiteres frei kommen, sobald sie von den betreffenden Aufnahmemulden 16 der Einstoßtrommel 6 erfasst sind, und mitgenommen werden. Gleichzeitig werden die von der Einstoßtrommel 6 bereits erfassten Artikel 2 aber von dem exzentrischen Steg 37 noch in Förderrichtung (vgl. v_{T}) der Einstoßtrommel 6 geschoben, was ebenfalls eine Verbesserung der Überführung der Artikel 2 aus der längsaxialen in die queraxiale Bewegungsrichtung fördert.

Die Saugluft der Stabilisationsvorrichtung 41 ist vorzugsweise so eingestellt, dass die Haltekraft des Artikels 2 geringer ist als die Haltekraft der Saugluft an der Exzenterscheibe 11 alleine bzw. in Kombination der Exzenterscheiben 9, 11.

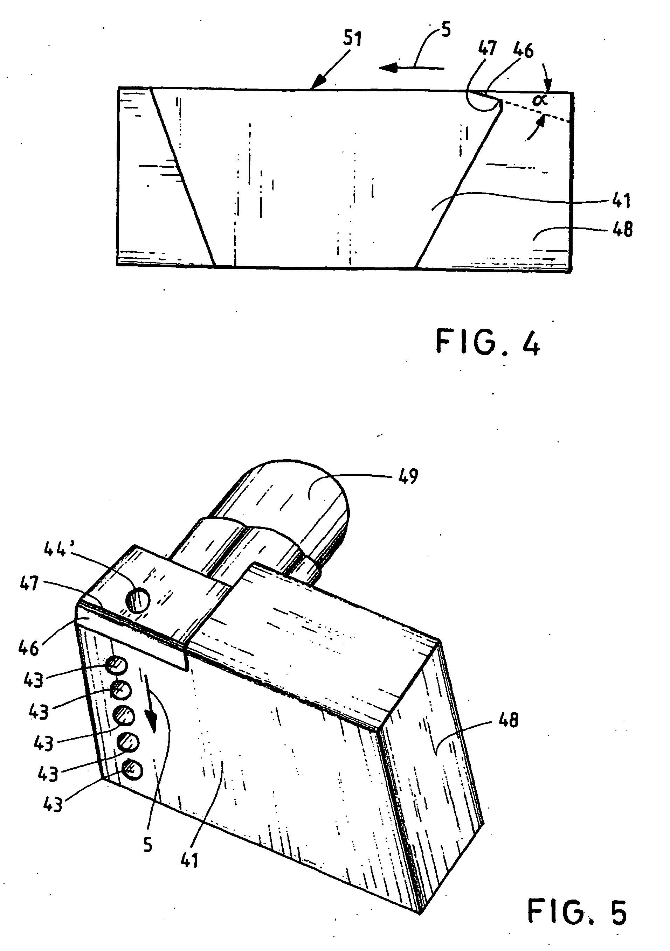

Fig. 4 zeigt eine schematische Seitenansicht der erfindungsgemäßen Stabilisationsvorrichtung 41. Es ist der Befestigungskörper 48 vorgesehen, der in der Zeichnungsebene hinter dem im Förderbereich des Artikels 2 vorgesehenen Körper der Stabillsationsvorrichtung 41 angeordnet ist. Es ist eine Fase 46 vorgesehen, die beispielsweise mit einem Winkel a von 10° bis 25°, vorzugsweise im Bereich von 15° bis 20°, gegenüber der Führungsfläche 51 gefast ist. Es ist ferner eine abgerundete Kante 47 vorgesehen. Sowohl die Kante 47 als auch die Fase 46 dienen zur beschädigungsfreien Übergabe von Artikels 2 auf die Führungsfläche 51.

Fig. 5 zeigt eine schematische dreidimensionale Darstellung einer erfindungsgemäßen Stabilisationsvorrichtung 41. Es sind entsprechende Saugluftöffnungen 43 vorgesehen. In diesem Ausführungsbeispiel sind fünf Saugluftöffnungen 43 vorgesehen. Es sind auch die Fase 46 und die abgerundete Kante 47 dargestellt. Ferner ist eine Bohrung 44' vorgesehen, die dazu dient, die Saugluftöffnungen 43 auf einfache Weise mit dem Saugluftanschluss 49 zu verbinden. Die Bohrung 44' ist im oberen Bereich der Bohrung verschlossen, damit die Saugluftöffnungen 43 funktionsfähig sind. Der der Führungsfläche zugeordnete Körper der Stabilisationsvorrichtung 41 ist mit einem Winkel von vorzugsweise im Bereich von 30° zur Normalen der Führungsfläche 51 angeschnitten, um diesen Teil der Stabilisationsvorrichtung 41 zwischen die Exzenterscheiben 9, 11 einzupassen.

### Bezugszeichenliste

- 1: Strangmaschine
- 2: Filterstab
- 3: Nut
- 4: Prismenschiene
- 5: Förderrichtung
- 6: Einstoßtrommel
- 7: Gleitfläche
- 8: Montageplatte
- 9: Exzenterscheibe
- 11: Exzenterscheibe
- 12: Zahnriemen
- 13: Umfangsabschnitt
- 14: Umfangsabschnitt
- 16: Aufnahme
- 17: Lagergehäuse
- 18: Lagerring
- 19: Lagerbuchse
- 21: Antriebswelle
- 22: Zahnriemenscheibe
- 24: Umfangswand
- 26: Gehäuseteil
- 27: Innenraum
- 28: Steuerschlitz
- 29: Saugluftöffnung
- 31: Anschluss
- 32: Unterdruckquelle
- 33: Befestigungswinkel
- 34: Abdeckung
- 36: Pfeil
- 37: Steg
- 38: Führungsnut
- 39: Umfangsbereich
- 41: Stabilisationsvorrichtung
- 42: Unterdruckquelle
- 43: Saugluftöffnung
- 44, 44', 44": Bohrung
- 46: Fase
- 47: Kante (abgerundet)
- 48: Befestigungskörper
- 49: Saugluftanschluss
- 51: Führungsfläche

## Patentansprüche

1. Vorrichtung zum, insbesondere längsaxialen, Fördern von stabförmigen Artikeln (2) der Tabak verarbeitenden Industrie mit einem ersten sich bewegenden Förderelement (11), das zur queraxialen Beschleunigung der Artikel (2) rotationsasymmetrisch ist, wobei relativ zur Förderrichtung (5) des Artikels (2) stromaufwärts des ersten sich bewegenden Förderelements (11) eine Stabilisationsvorrichtung (41) vorgesehen ist, die wenigstens eine Saugluftöffnung (43) aufweist, die in Wirkverbindung mit einem stabförmigen Artikel (2) bringbar ist, **dadurch gekennzeichnet, dass** ein zweites sich bewegendes Förderelement (9) vorgesehen ist, das relativ zur Förderrichtung (5) des Artikels (2) stromaufwärts der Stabilisationsvorrichtung (41) angeordnet ist, wobei das erste und/oder zweite Förderelement (9, 11) als eine die Artikel (2) queraxial beschleunigende Exzenterscheibe (9, 11) ausgebildet ist und wenigstens eine Saugluftöffnung (29) im Bereich eines Exzenters (37) der Exzenterscheibe (9, 11) angeordnet ist.

2. Vorrichtung nach Anspruch 1, **dadurch gekennzeichnet, dass** die Stabilisationsvorrichtung (41) positionsneutral ist.

3. Vorrichtung nach Anspruch 2, **dadurch gekennzeichnet, dass** die Saugluftöffnung (43) ausgebildet ist, um einen stabförmigen Artikel (2) queraxial anzusaugen.

4. Vorrichtung nach Anspruch 2 oder 3, **dadurch gekennzeichnet, dass** zwei oder mehr als zwei, insbesondere fünf, Saugluftöffnungen (43) vorgesehen sind.

5. Vorrichtung nach einem der Ansprüche 1 bis 4, **dadurch gekennzeichnet, dass** das erste und/oder zweite Förderelement (9, 11) wenigstens eine Saugluftöffnung (29) aufweist, um einen stabförmigen Artikel (2) während der Förderung zeitweise zu halten.

6. Vorrichtung nach einem der Ansprüche 1 bis 5, **dadurch gekennzeichnet, dass** das zweite Förderelement (9) als rotierende Scheibe ausgebildet ist.

7. Vorrichtung nach einem der Ansprüche 1 bis 6, **dadurch gekennzeichnet, dass** das zweite Förderelement (9) rotationsasymmetrisch ist.

8. Vorrichtung nach einem der Ansprüche 1 bis 7, **dadurch gekennzeichnet, dass** stromabwärts des ersten Förderelements (11) eine Einstoßtrommel (6) vorgesehen ist, die die aufgenommenen Artikel (2) queraxial fördert.

9. Vorrichtung nach einem der Ansprüche 1 bis 8, **dadurch gekennzeichnet, dass** das erste und/oder zweite Förderelement (9, 11) einen Artikel (2) längsaxial beschleunigt.

10. Vorrichtung nach einem der Ansprüche 1 bis 9, **dadurch gekennzeichnet, dass** die Stabilisationsvorrichtung (41) an deren stromaufwärtigen Teil eine Fase (46) und/oder eine abgerundete Kante (47) aufweist.

## Claims

1. Device for conveying rod-shaped articles (2) in the tobacco processing industry, in particular in the direction of the longitudinal axis, with a first moving conveyor element (11) which is rotationally asymmetrical in order to accelerate the articles (2) transversely to the axis, and a stabiliser device (41) is provided upstream of the first moving conveyor element (11) relative to the conveying direction (5) of the article (2) which has at least one suction air orifice (43) which can be placed in a working connection with a rod-shaped article (2), **characterised in that** a second moving conveyor element (9) is provided, which is disposed upstream of the stabiliser device (41) relative to the conveying direction (5) of the article (2), and the first and/or second conveyor element (9, 11) is provided in the form of an eccentric disc (9, 11) accelerating the articles (2) transversely to the axis and at least one suction air orifice (29) is disposed in the region of an eccentric element (37) of the eccentric disc (9, 11).

2. Device as claimed in claim 1, **characterised in that** the stabiliser device (41) is neutral in terms of position.

3. Device as claimed in claim 2, **characterised in that** the suction air orifice (43) is designed to suck in a rod-shaped article (2) transversely to the axis.

4. Device as claimed in claim 2 or 3, **characterised in that** two or more than two, in particular five, suction air orifices (43) are provided.

5. Device as claimed in one of claims 1 to 4, **characterised in that** the first and/or second conveyor element (9, 11) has at least one suction air orifice (29) in order to hold a rod-shaped article (2) for a time during conveying.

6. Device as claimed in one of claims 1 to 5, **characterised in that** the second conveyor element (9) is provided in the form of a rotating disc.

7. Device as claimed in one of claims 1 to 6, **characterised in that** the second conveying element (9) is rotationally asymmetrical.

8. Device as claimed in one of claims 1 to 7, **characterised in that** a pusher drum (6) is provided downstream of the first conveying element (11), which conveys the picked-up articles (2) transversely to the axis.

9. Device as claimed in one of claims 1 to 8, **characterised in that** the first and/or second conveying element (9, 11) accelerates an article (2) in the direction of the longitudinal axis.

10. Device as claimed in one of claims 1 to 9, **characterised in that** the stabiliser device (41) has a bevel (46) and/or a rounded edge (47) on its upstream part.

## Revendications

1. Dispositif destiné à transporter, en particulier dans une direction longitudinale par rapport à l'axe, des articles (2) en forme de tiges de l'industrie de transformation du tabac, comprenant un premier élément de transport (11) en mouvement, qui est asymétrique en rotation pour l'accélération transversale par rapport à l'axe de l'article (2), un dispositif stabilisateur (41) étant prévu en amont du premier élément de transport (11) en mouvement par rapport à la direction de transport (5) de l'article (2), lequel dispositif stabilisateur présente au moins une ouverture d'air d'aspiration (43) qui peut être amenée en liaison active avec un article (2) en forme de tige, **caractérisé en ce qu'**est prévu un deuxième élément de transport (9) en mouvement qui est disposé en amont du dispositif stabilisateur (41) par rapport à la direction de transport (5) de l'article (2), le premier et/ou le deuxième élément de transport (9, 11) étant conçu en tant que disque d'excentrique (9, 11) accélérant l'article (2) en direction transversale par rapport à l'axe et **en ce qu'**au moins une ouverture d'air d'aspiration (29) est disposée dans la région d'un excentrique (37) du disque d'excentrique (9, 11).

2. Dispositif selon la revendication 1, **caractérisé en ce que** le dispositif stabilisateur (1) est neutre en position.

3. Dispositif selon la revendication 2, **caractérisé en ce que** l'ouverture d'air d'aspiration (43) est conçue pour aspirer un article (2) en forme de tige en direction transversale par rapport à l'axe.

4. Dispositif selon la revendication 2 ou 3, **caractérisé en ce que** sont prévues deux ou plus de deux, en particulier cinq, ouvertures d'air d'aspiration (43).

5. Dispositif selon l'une des revendications 1 à 4, **caractérisé en ce que** le premier et/ou le deuxième élément de transport (9, 11) présente au moins une ouverture d'air d'aspiration (29) pour maintenir temporairement un article (2) en forme de tige pendant le transport.

6. Dispositif selon l'une des revendications 1 à 5, **caractérisé en ce que** le deuxième élément de transport (9) est conçu sous forme de disque rotatif.

7. Dispositif selon l'une des revendications 1 à 6, **caractérisé en ce que** le deuxième élément de transport (9) est asymétrique en rotation.

8. Dispositif selon l'une des revendications 1 à 7, **caractérisé en ce qu'**est prévu, en aval du premier élément de transport (11), un tambour poussoir (6) qui transporte les articles (2) reçus dans une direction transversale par rapport à l'axe.

9. Dispositif selon l'une des revendications 1 à 8, **caractérisé en ce que** le premier et/ou le deuxième élément de transport (9, 11) accélère un article (2) dans la direction longitudinale par rapport à l'axe.

10. Dispositif selon l'une des revendications 1 à 9, **caractérisé en ce que** le dispositif de stabilisation (41) présente, au niveau de sa partie située en amont, un chanfrein (46) et/ou un bord (47) arrondi.
